# EUROPÄISCHE PATENTSCHRIFT

(11) **EP 1 423 301 B1**
(45) Veröffentlichungstag und Bekanntmachung des Hinweises auf die Patenterteilung: **22.11.2006**
(21) Anmeldenummer: 02754381.8
(22) Anmeldetag: 18.07.2002
(51) Int. Cl.: B60R 21/01

(54) **VERFAHREN ZUR BESTIMMUNG EINER AUSLÖSEZEIT FÜR RÜCKHALTEMITTEL IN EINEM FAHRZEUG**
METHOD FOR DETERMINING A TRIGGER TIME FOR RESTRAINT MEANS IN A VEHICLE
PROCEDE PERMETTANT DE DETERMINER UN TEMPS DE DECLENCHEMENT POUR DES MOYENS DE RETENUE DANS UN VEHICULE

(30) Priorität: 28.08.2001 DE 10141886
(43) Veröffentlichungstag der Anmeldung: 02.06.2004
(73) Patentinhaber: ROBERT BOSCH GMBH, 70442 Stuttgart (DE)
(72) Erfinder: EISELE, Sybille, 74321 Bietigheim-Bissingen (DE); ROELLEKE, Michael, 71229 Leonberg-Hoefingen (DE); THEISEN, Marc, 74354 Besigheim (DE)
(86) Internationale Anmeldenummer: PCT/DE2002/002629
(87) Internationale Veröffentlichungsnummer: WO 2003/026931

(56) Entgegenhaltungen:
- DE-A- 19 740 019
- DE-A- 19 840 440
- US-A- 5 809 439
- US-A- 6 047 985
- US-B1- 6 181 998

## Beschreibung

### Stand der Technik

Die Erfindung geht aus von einem Verfahren zur Bestimmung einer Auslösezeit für Rückhaltemittel in einem Fahrzeug nach der Gattung des unabhängigen Patentanspruchs.

Aus DE 197 40 019 A1 ist ein Verfahren zum Auslösen von Rückhaltemitteln in einem Fahrzeug bekannt. Dabei werden die Signale von Beschleunigungssensoren verwendet, insbesondere eines Upfront-Sensors und eines zentral angeordneten Beschleunigungssensors. Dabei werden die integrierten Beschleunigungssignale verwendet. Damit ist dann der Geschwindigkeitsabbau bei einem Aufprall ermittelbar. Es wird innerhalb eines konstanten Zeitfensters die Dynamik dieses Signals überprüft. Das heißt, überschreitet in einem festen Zeitfenster das Aufprallsignal einen ersten Schwellwert oder einen zweiten oder einen dritten Schwellwert, werden entsprechende Code-Signale, die die Auslösung bewirken sollen, über eine Schnittstelle abgesendet.

### Vorteile der Erfindung

Das erfindungsgemäße Verfahren zur Bestimmung einer Auslösezeit für Rückhaltemittel in einem Fahrzeug mit den Merkmalen des unabhängigen Patentanspruchs hat folgende Vorteile: Durch die Berücksichtigung des Geschwindigkeitsabbaus in wenigstens einem Zeitfenster, der Aufprallzeit und der Aufprallgeschwindigkeit ist die Auslösezeit genauer bestimmbar. Damit können insbesondere Crashs gegen eine starre Barriere gut von anderen Crashtypen unterschieden und somit bei diesen Merkmalskombinationen die Unterschiede zwischen den Crashtypen besser herausgestellt werden.

Darüber hinaus ist es von Vorteil, dass die Aufprallzeit und die Aufprallgeschwindigkeit mittels einer Precrash-Sensorik bestimmt werden, beispielsweise Radarsensoren, Videosensoren und/oder Ultraschallsensoren, die alle zur Rundumsicht in einem Fahrzeug an verschiedenen Stellen verbaut werden können.

Durch die in den abhängigen Ansprüchen aufgeführten Maßnahmen und Weiterbildungen sind vorteilhafte Verbesserungen des im unabhängigen Patentanspruchs angegebenen Verfahrens zur Bestimmung einer Auslösezeit für Rückhaltemittel in einem Fahrzeug möglich.

Besonders vorteilhaft ist, dass nach einem ersten Zeitfenster ein zweites Zeitfenster bestimmt wird, und jeweils in den beiden Zeitfenstern die Steigung des Geschwindigkeitsabbaus und die Lage der Zeitfenster bestimmt wird, um damit in Verbindung mit der Aufprallgeschwindigkeit und der Aufprallzeit einen Crashtyp zu ermitteln, der dann zur Bestimmung der Auslösezeit führt. Damit wird insgesamt eine genauere Bestimmung der Auslösezeit möglich.

Weiterhin ist es von Vorteil, dass für die Zeitfenster jeweils eine Minimalzeit vorgegeben wird, um nicht auf Störungen zu reagieren. Wird diese Minimalzeit nicht erreicht, wird das Zeitfenster als nicht existent angenommen .

Weiterhin ist es von Vorteil, dass der erreichte Schwellwert für den Geschwindigkeitsabbau nach der Detektion des Crashtyps als eine kontinuierliche Schwellwertfunktion angenommen wird. Dies hat den Vorteil, dass mit einer solchen kontinuierlichen Schwellwertfunktion eine Schwankung bei der Bestimmung der Auslösezeit ausgeglichen werden kann. Das führt also zu einer genaueren Bestimmung der Auslösezeit. Darüber hinaus geht bei der Nutzung der Signaleigenschaft eine eventuelle Ungenauigkeit des Aufprallzeitpunktes nicht direkt in die Berechnung der Auslösezeit ein.

Schließlich ist es auch von Vorteil, dass für einen Crashtyp für eine bestimmte Aufprallgeschwindigkeit mittels einer Tabelle eine entsprechende Auslösezeit bestimmt wird. Dies beschleunigt das erfindungsgemäße Verfahren.

### Zeichnung

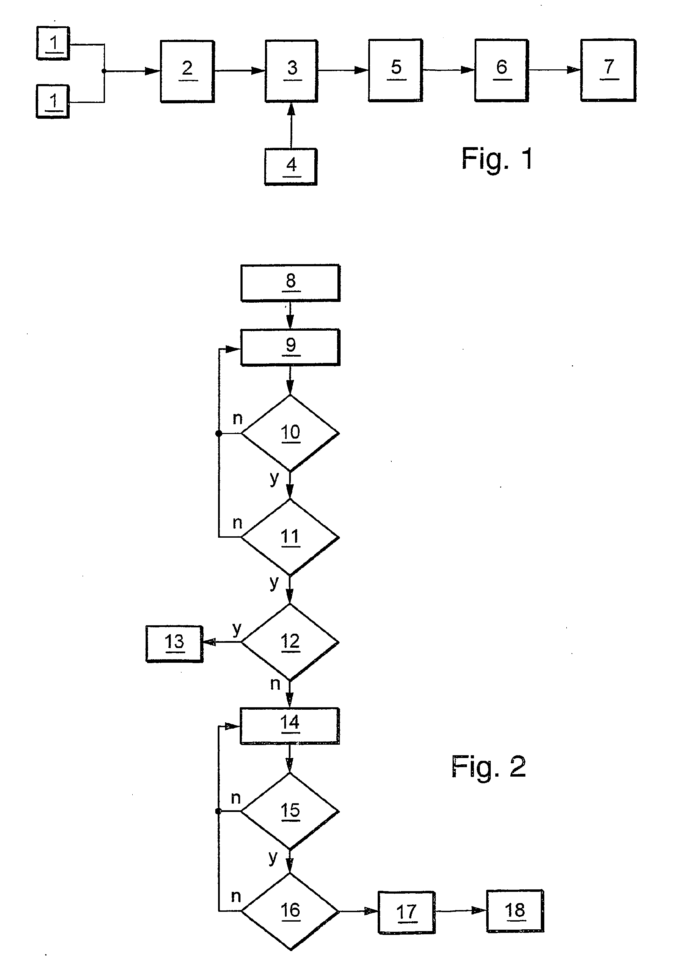

Ausführungsbeispiele der Erfindung sind in der Zeichnung dargestellt und werden in der nachfolgenden Beschreibung näher erläutert. Figur 1 zeigt ein Blockschaltbild einer erfindungsgemäßen Vorrichtung und Figur 2 ein Flussdiagramm des erfindungsgemäßen Verfahrens.

### Beschreibung

Zukünftig sollen zur Aufprallerkennung in einem Kraftfahrzeug zusätzlich zu reinen Aufprallsensoren wie Beschleunigungssensoren auch Precrash-Sensoren eingesetzt werden, die die Informationen Aufprallgeschwindigkeit und Aufprallzeitpunkt vor Beginn eines Crashs zur Verfügung stellen. Somit wird ein System benutzt, welches die Signale eines Aufprallsensors als auch die eines Precrash-Sensors verwendet.

Eine Crashschwere hängt von der Crashkonstellation, also einem frontalen Aufprall, einem Seitenaufprall, oder einem Aufprall der in einem gewissen Winkel stattfindet, von der Eigenschaft des Hindernisses, hierzu gehören die Steifigkeit, die Masse, die Form und Größe, und von der Aufprallgeschwindigkeit des Kraftfahrzeuges ab. Als Crashtyp bezeichnet man eine Kombination aus der Crashkonstellation, also welcher Art der Crash ist, und den Eigenschaften des Hindernisses bzw. der Barriere. Über geschwindigkeitsabhängige Merkmale soll erfindungsgemäß der Crashtyp identifiziert werden. Damit kann dann die optimale Auslösezeit bestimmt werden. Die Auslösezeit ist der Zeitpunkt, wenn die Rückhaltemittel, also Airbag oder Gurtstraffer, ausgelöst werden. Daher müssen diese Merkmale zeitlich vor oder spätestens mit der Auslöseentscheidung detektiert werden. Erfindungsgemäß wird eine kontinuierliche Schwellenwertfunktion für den Geschwindigkeitsabbau zur Berechnung der Auslösezeit verwendet, so dass eine Schwankung bei der Berechnung der Auslösezeit ausgeglichen werden kann. Dabei geht dann nur eine Signaleigenschaft und nicht eine eventuelle Ungenauigkeit des Aufprallzeitpunkts in die Bestimmung der Auslösezeit ein.

Ein Aufprall, beispielsweise ein Frontaufprall, verläuft in mehreren Phasen. Zunächst wird eine erste Barriere deformiert, wobei ein starker, negativer Gradient des Geschwindigkeitsabbaus auftritt. Im weiteren Verlauf tritt ein zweiter negativer Gradient ein, wobei der zeitliche Abstand der beiden Gradienten von der Aufprallgeschwindigkeit abhängt.

Ein starker Geschwindigkeitsabbau korreliert mit einem Bruchverhalten in den entsprechenden Fahrzeugstrukturen. Der erste Gradient stellt ein Bruchverhalten im Bereich der Stoßstange, der zweite Gradient ein Bruchverhalten in den Strukturen hinter der Stoßstange, beispielsweise in einer Crashbox dar. Unter Crashbox versteht man eine Struktur, eine Art Puffer bzw. Sollbruchstelle hinter der Stoßstange, die bei Crashs mit niedriger Aufprallgeschwindigkeit (bis ca. 15km/h) unter der Voraussetzung, dass das Fahrzeug nur an der Stoßstange getroffen wird, dafür sorgt, dass bei der Reparatur des Fahrzeugs nur die Stoßstange und die Crashbox getauscht werden müssen. Zwischen den beiden Gradienten wird kaum Geschwindigkeit abgebaut. Teilweise kann es nach dem ersten Bruchverhalten in dem Innenraum, das ist der Bereich, in dem sich der Beschleunigungssensor befindet, sogar wieder zu Beschleunigungen kommen. Der Verlauf des Geschwindigkeitsabbaus zwischen den beiden Gradienten zeigt ein elastisches Verhalten. Tendenziell steigt der Betrag der negativen Steigung im ersten Gradienten mit der Aufprallgeschwindigkeit.

Erfindungsgemäß wird nun ein Verfahren realisiert, das die beiden Zeitfenster der Gradienten und deren Steigungen detektiert. Dazu wird der Signalverlauf des Geschwindigkeitsabbaus zwischen zwei aufeinanderfolgenden Abtastwerten als linear angenommen. Es werden laufend die Steigungen der Geradenabschnitte zwischen aufeinanderfolgenden Abtastwerten mit den jeweils vorhergehenden verglichen. Sobald die aktuelle Steigung weniger als ein applizierbarer Parameter von der vorgehenden Steigung abweicht und die detektierte Steigung negativer als eine applizierbare Schwelle ist, wird der Beginn eines Zeitfensters erkannt. Trifft diese Bedingung nicht mehr zu, dann wird das Ende des Zeitfensters erkannt.

Ein erkanntes Zeitfenster muss darüber hinaus eine Mindestlänge, die ebenfalls vorgebbar ist, aufweisen, ansonsten wird es als solches nicht erkannt. Bei der Berechnung der Steigung eines Gradienten in einem Zeitfenster wird eine Gerade durch den Anfangs- und Endpunkt eines erkannten Zeitfensters gelegt und deren Steigung ermittelt. Es ist jedoch möglich auch andere Verfahren mit mehr Abtastpunkten zur Bestimmung der Steigung einzusetzen.

Die Parameter zum Vergleich der Steigungen der Geradenabschnitte sind für die beiden Zeitfenster unabhängig voneinander anwendbar. Das erfindungsgemäße Verfahren erkennt den Beginn bzw. das Ende eines Zeitfensters jeweils mit einer Verzögerung von einem Abtastwert.

Unter Berücksichtigung der geforderten Auslösezeit teilen sich die Crashtests des betrachteten Crashtyps - frontal gegen eine starre Barriere - in zwei Gruppen auf: Die erste Gruppe umfaßt die Crashs dieses Typs mit einer niedrigen bis mittleren Aufprallgeschwindigkeit, während die zweite Gruppe Crashes umfaßt, die eine hohe Aufprallgeschwindigkeit aufweisen. Bei den Crashs der zweiten Gruppe ist die Zeit zwischen Crashbeginn und Auslöserentscheidung recht kurz. Bei diesen Crashs wird zur Berechnung der Auslösezeit das Ende des ersten Zeitfensters verwendet. Bei der ersten Gruppe werden die beiden Gradienten vor der erforderlichen Auslösezeit detektiert. Mit der zusätzlichen Information der Aufprallgeschwindigkeit kann zum Beispiel mittels eines Tabellenzugriffs - in der Tabelle sind die von der Aufprallgeschwindigkeit abhängigen Auslösezeiten angelegt - auf die richtige Auslösezeit geschlossen werden. Bei diesem Verhalten kann eine ungenaue Information bezüglich des Aufprallzeitpunktes Schwierigkeiten bereiten, da die Genauigkeit des Aufprallzeitpunkts sich direkt auf die Genauigkeit der Auslösezeit überträgt.

Für die Berechnung der Auslösezeiten wird bei der ersten Gruppe eine kontinuierliche Schwellenfunktion für den erreichten Geschwindigkeitsabbau verwendet. Wurden die beiden Zeitfenster erkannt und durch Auswertung der Lage der Fenster und der Steigungen der beiden Gradienten der Crashtyp identifiziert, wird der Verlauf des Geschwindigkeitsabbaus solange weiter beobachtet, bis dieser die kontinuierliche Schwellenfunktion überschreitet. Dieser Zeitpunkt gibt die Auslösezeit an.

Figur 1 zeigt als Blockschaltbild die erfindungsgemäße Vorrichtung. Precrash-Sensoren 1, beispielsweise Radarsensoren und/ oder Ultraschallsensoren, sind an einer Auswerteeinheit 2 zur Ermittlung der Aufprallgeschwindigkeit und der Aufprallzeit angeschlossen. Die Auswerteeinheit 2 ist daher ein Prozessor.

Die Precrash-Sensoren 1 sind hier Radarsensoren, es können jedoch auch zusätzlich oder alternativ Videosensoren bzw. Ultraschallsensoren verwendet werden. Die Auswerteeinheit 2 ist dann an eine weitere Auswerteeinheit 3 angeschlossen und zwar an deren ersten Dateneingang, die zur Crashtypidentifikation innerhalb vorgegebener Geschwindigkeitsbänder und zur Auslöseberechnung dient. Dazu verwendet die Auswerteeinheit 3, die auch als Prozessor ausgebildet ist, zusätzlich Daten von einem Aufprallsensor 4, der an einen zweiten Dateneingang der Auswerteeinheit 3 angeschlossen ist. Der Aufprallsensor 4 ist hier ein Beschleunigungssensor mit zusätzlicher Elektronik, die zur Signalaufbereitung dient. Der Einfachheit halber ist hier nur ein Beschleunigungssensor 4 angegeben, es können jedoch mehr Beschleunigungssensoren angeschlossen sein, insbesondere auch ausgelagerte Sensoren, die also beispielsweise am Kühler als Upfrontsensoren vorhanden sind, oder als Seitenaufprallsensoren in der Seite oder am Sitzquerträger. Zusätzlich ist es möglich, dass auch Beschleunigungssensoren in einem zentralen Steuergerät beispielsweise auch am Fahrzeugtunnel angeordnet sind. Anstatt von Beschleunigungssensoren können auch Druck- und/oder Körperschall- und/oder Temperatursensoren eingesetzt werden. Die Auswerteeinheiten 2 und 3 können zu einem Prozessor zusammengefaßt sein.

Die Auswerteeinheit 3 berechnet dann aus diesen Daten mit dem erfindungsgemäßen Verfahren die Auslösezeit und übermittelt diese an ein Ansteuerungsteil 5 für die Aktuatorik. Das Ansteuerungsteil 5 ist hier eine Zündkreisansteuerung, die einen Aktuator 6 ansteuert, der dann die Rückhaltemittel 7 zur Auslösezeit auslöst.

Figur 2 zeigt nun als ein Flussdiagramm das erfindungsgemäße Verfahren. Im Verfahrensschritt 8 erfolgt die Erzeugung des Beschleunigungssignals mittels des Aufprallsensors 4. Bei einem Aufprall auf das Kraftfahrzeug kommt es zu entsprechenden Beschleunigungen, für die der Aufprallsensor 4 ausgelegt sein muß.

Im Verfahrensschritt 9 wird bei einem Crash der Geschwindigkeitsabbau und die Steigung im Verlauf des Geschwindigkeitsabbaus ermittelt. Der Geschwindigkeitsabbau leitet sich aus dem Beschleunigungssignal ab. Dies wird dadurch durchgeführt, dass für das Beschleunigungssignal eine Integration durchgeführt wird. Die Steigung im Verlauf des Geschwindigkeitsabbaus leitet sich aus dem Geschwindigkeitsabbau ab. Dies wird dadurch durchgeführt, dass zwischen Abtastwerten des Geschwindigkeitsabbaus eine lineare Interpolartion durchgeführt wird. Alternativ ist es hier möglich, dass auch andere Interpolartionen, also nichtlineare, durchgeführt werden.

Im Verfahrensschritt 10 wird dann überprüft, ob die ermittelte Steigung negativer ist, als eine vorgegebene Schwelle für die Steigung. Nur wenn dies der Fall ist, wird das erste Zeitfenster gestartet. Es wird in diesem Verfahrensschritt ferner die Zeitdauer ermittelt, für die die aktuell ermittelte Steigung im Verlauf des Geschwindigkeitsabbaus die vorgegebene Schwelle für die Steigung unterschreitet. Trifft diese Bedingung nicht mehr zu, wird zum Verfahrensschritt 11 gesprungen, indem überprüft wird, ob die ermittelte Zeitdauer für das Zeitfenster eine vorgegebene minimale Zeit überschritten hat. Wurde jedoch im Verfahrensschritt 10 erkannt, dass die Steigung nicht negativer als die vorgegebene Schwelle ist, dann wird zu Verfahrensschritt 9 zurückgesprungen, und es wird weiter die Steigung im Verlauf des Geschwindigkeitsabbaus ermittelt.

Wurde nun im Verfahrenschritt 11 ermittelt, dass die in Verfahrensschritt 10 ermittelte Zeitdauer nicht die Minimalzeit erreicht hat, wird zu Verfahrensschritt 9 zurückgesprungen. Wurde jedoch diese minimale Zeit überschritten, dann erhält das erste Zeitfenster die in Verfahrensschritt 10 ermittelte Zeitdauer, und es wird im Verfahrenschritt 12 überprüft, ob die Aufprallgeschwindigkeit, die mit den Precrash-Sensoren 1 und der Auswerteeinheit 2 ermittelt wurde, eine vorgegebene Schwelle überschritten hat. Ist das der Fall, dann wird im Verfahrensschritt 13 ein Crashtyp durch die Auswerteeinheit 3 identifiziert, indem die Steigung im ersten zeitfenster und die Lage des ersten Zeitfensters im entsprechenden Geschwindigkeitsband bestimmt wird. Handelt es sich um einen harten Crash, also einen Crash gegen eine starre Barriere, wird das Ende des ersten Zeitfensters daher als Auslösezeit erkannt. Dann erfolgt über das Ansteuerungsteil 5 und den Aktuator 6 die Auslösung der Rückhaltemittel 7. Handelt es sich um einen weichen Crash, wird zu Verfahrensschritt 14 gesprungen.

Wurde jedoch im Verfahrensschritt 12 erkannt, dass die Aufprallgeschwindigkeit nicht über dieser Schwelle liegt, dann wird im Verfahrensschritt 14 erneut die Steigung im Verlauf des Geschwindigkeitsabbaus ermittelt, um im Verfahrensschritt 15 zu überprüfen, ob eine vorgegebene Schwelle für ein zweites Zeitfenster durch die Steigung unterschritten wurde und zwar durch die Steigung. Ist das nicht der Fall, dann wird weiterhin die Steigung im Verlauf des Geschwindigkeitsabbaus im Verfahrensschritt 14 ermittelt. Im Verfahrensschritt 15 wird ferner die Zeitdauer, für die zuvor genannte Bedingung zutrifft, ermittelt. Im Verfahrensschritt 16 wird überprüft, ob die ermittelte Zeitdauer die Minimalzeit überschritten hat.

Erreicht die ermittelte Zeitdauer die Minimalzeit nicht, wird weiterhin die Steigung im Verlauf des Geschwindigkeitsabbaus ermittelt. Hat die ermittelte Zeitdauer die Minimalzeit überschritten, erhält das zweite Zeitfenster diese Zeitdauer, und es wird im Verfahrensschritt 17 eine Crashtypidentifikation durch die Auswerteeinheit 3 vorgenommen. Dies wird über die Lage der beiden Zeitfenster, des ersten und des zweiten, durchgeführt, wobei eine Plausibilisierung mit der Steigung in den Zeitfenstern für das entsprechende Geschwindigkeitsband durchgeführt wird.

Im Verfahrensschritt 18 erfolgt dann eine weitere Betrachtung des Verlaufs des Geschwindigkeitsabbaus bis eine vorgegebene Schwellenwertfunktion für den Geschwindigkeitsabbau überschritten wird. Dann wird die Auslösezeit erkannt, und es erfolgt die Auslösung der Rückhaltemittel 7. Die Schwellenwertfunktion wird je nach identifiziertem Crashtyp ausgewählt.

## Patentansprüche

1. Verfahren zur Bestimmung einer Auslösezeit für Rückhaltemittel (7) in einem Fahrzeug, wobei Beschleunigungssignale von Beschleunigungssensoren (4) erzeugt werden, wobei aus den Beschleunigungssignalen ein Geschwindigkeitsabbau des Fahrzeugs, das auf ein Objekt prallt, bestimmt wird, **dadurch gekennzeichnet, dass** in Abhängigkeit von wenigstens einem Vergleich des Geschwindigkeitsabbaus mit wenigstens einem ersten Schwellwert wenigstens ein erstes Zeitfenster bestimmt wird, dass in Abhängigkeit von der Steigung des Geschwindigkeitsabbaus in dem wenigstens einem ersten Zeitfenster, von der Aufprallzeit und von der Aufprallgeschwindigkeit die Auslösezeit bestimmt wird, wobei die Aufprallzeit und die Aufprallgeschwindigkeit mittels einer Precrash-Sensorik (1) bestimmt werden.

2. Verfahren nach Anspruch 1, **dadurch gekennzeichnet, dass** in Abhängigkeit von der Aufprallgeschwindigkeit, der Lage des ersten Zeitfensters und der Steigung des Geschwindigkeitsabbaus im ersten Zeitfenster ein zweites Zeitfenster bestimmt wird und dass dann ein Crashtyp in Abhängigkeit von den jeweiligen Lagen der beiden Zeitfenstern, von der Aufprallzeit und von der Aufprallgeschwindigkeit bestimmt wird, wobei nach dem Ende des zweiten Zeitfensters der Geschwindigkeitsabbau mit einem zweiten Schwellwert verglichen wird, um in Abhängigkeit von dem Crashtyp die Auslösezeit zu bestimmen.

3. Verfahren nach einem der vorhergehenden Ansprüche, **dadurch gekennzeichnet, dass** für das wenigstens erste Zeitfenster eine Minimalzeit vorgegeben wird, um Störungen auszufiltern.

4. Verfahren nach einem der vorhergehenden Ansprüche, **dadurch gekennzeichnet, dass** der zweite Schwellwert als kontinuierliche Schwellwertfunktionen verwendet wird.

5. Verfahren nach einem der Ansprüche 1, 2, 3 oder 4, **dadurch gekennzeichnet, dass** bei einem Crashtyp für eine bestimmte Aufprallgeschwindigkeit mittels einer Tabelle eine entsprechende Auslösezeit bestimmt wird

## Claims

1. Method for determining a trigger time for restraint means (7) in a vehicle, acceleration signals being generated by acceleration sensors (4), a reduction in speed of the vehicle which impacts against an object being determined from the acceleration signals, **characterized in that** at least a first time window is determined as a function of at least a comparison of the reduction in speed with at least a first threshold value, **in that** the trigger time is determined from the impact time and from the impact speed as a function of the gradient of the reduction in speed in the at least one first time window, the impact time and the impact speed being determined by means of a precrash sensor system (1).

2. Method according to Claim 1, **characterized in that** a second time window is determined as a function of the impact speed, the position of the first time window and the gradient of the reduction in speed in the first time window, and **in that** a crash type is then determined as a function of the respective positions of the two time windows, of the impact time and of the impact speed, in which case, after the end of the second time window, the reduction in speed is compared with a second threshold value in order to determine the trigger time as a function of the crash type.

3. Method according to one of the preceding claims, **characterized in that** a minimum time is predefined for the at least first time window in order to filter out interference.

4. Method according to one of the preceding claims, **characterized in that** the second threshold value is used as continuous threshold value functions.

5. Method according to one of Claims 1, 2, 3 or 4, **characterized in that** a corresponding trigger time is determined for a specific impact speed for a crash type by means of a table.

## Revendications

1. Procédé pour déterminer le temps de déclenchement des moyens de retenue (7) dans un véhicule, générant des signaux d'accélération par des capteurs d'accélération (4) à partir desquels se détermine une perte de vitesse du véhicule entrant en collision, avec un objet
**caractérisé en ce qu'**
en fonction d'au moins une comparaison de la perte de vitesse avec au moins une première valeur de seuil, on détermine au moins une première fenêtre de temps,
en fonction de l'augmentation de la perte de vitesse dans la première fenêtre de temps, on détermine le temps de déclenchement à partir du temps d'impact et de la vitesse d'impact, le temps d'impact et la vitesse d'impact étant déterminés au moyen de capteurs de pré-collision (1).

2. Procédé selon la revendication 1,
**caractérisé en ce qu'**
en fonction de la vitesse d'impact, de la position de la première fenêtre de temps et de l'augmentation de la perte de vitesse dans la première fenêtre de temps, on détermine une deuxième fenêtre de temps, et ensuite on détermine un type de collision en fonction des positions respectives des deux fenêtres de temps, du temps d'impact et de la vitesse d'impact, à la fin de la deuxième fenêtre de temps, on compare la perte de vitesse à une deuxième valeur de seuil pour déterminer le temps de déclenchement en fonction du type de collision.

3. Procédé selon l'une des revendications précédentes,
**caractérisé en ce que**
pour au moins la première fenêtre de temps on prédéfinit un temps minimum pour filtrer les perturbations.

4. Procédé selon l'une des revendications précédentes,
**caractérisé en ce que**
des fonctions de valeur de seuil continues sont utilisées comme deuxième valeur de seuil.

5. Procédé selon l'une quelconque des revendications 1, 2, 3 ou 4,
**caractérisé en ce que**
dans un type de collision pour une vitesse d'impact déterminée, on détermine un temps de déclenchement correspondant au moyen d'un tableau.
